# EUROPÄISCHE PATENTSCHRIFT

(11) **EP 3 069 201 B1**
(45) Veröffentlichungstag und Bekanntmachung des Hinweises auf die Patenterteilung: **20.12.2017**
(21) Anmeldenummer: 14796121.3
(22) Anmeldetag: 11.11.2014
(51) Int. Cl.: G05B 13/02, B01J 19/00

(54) **VERFAHREN ZUM BETREIBEN EINER ZUR DURCHFÜHRUNG VON WENIGSTENS EINER CHEMISCHEN REAKTION EINGERICHTETEN ANLAGE**
METHOD FOR OPERATING A SYSTEM FOR CARRYING OUT OF AT LEAST ONE CHEMICAL REACTION
PROCÉDÉ DE FONCTIONNEMENT D'UNE INSTALLATION CONÇUE POUR RÉALISER AU MOINS UNE RÉACTION CHIMIQUE

(30) Priorität: 15.11.2013 EP 13193132
(43) Veröffentlichungstag der Anmeldung: 21.09.2016
(73) Patentinhaber: Bayer Aktiengesellschaft, 51373 Leverkusen (DE)
(72) Erfinder: KRASBERG, Nicolai, 40764 Langenfeld (DE); HOHMANN, Lukas, 46569 Hünxe (DE)
(74) Vertreter: BIP Patents
(86) Internationale Anmeldenummer: PCT/EP2014/074268
(87) Internationale Veröffentlichungsnummer: WO 2015/071259

(56) Entgegenhaltungen:
- DE-A1-102006 060 494
- US-A1- 2003 223 909

## Beschreibung

Die Arbeiten, die zu dieser Erfindung geführt haben, wurden gemäß der Finanzhilfevereinbarung Nr. 228867 im Zuge des Siebten Rahmenprogramms der Europäischen Union RP7/2007-2013 gefördert.
Die vorliegende Erfindung betrifft ein Verfahren zum Betreiben einer zur Durchführung von wenigstens einer chemischen Reaktion eingerichteten Anlage.
Des Weiteren betrifft die Erfindung ein Computerprogramm mit auf einem computerlesbaren Datenträger gespeicherten Programmcodemitteln, einen Datenträger sowie ein Computersystem.
Für die Durchführung einer chemischen Reaktion zur Herstellung eines bestimmten chemischen Produkts ist es erforderlich, eine Produktionsanlage mit individuell gestalteter Anlagenstruktur bereitzustellen. Um die jeweilig verfahrenstechnisch erforderlichen Prozessschritte in einzelnen Prozessabschnitten durchführen zu können, sind hierzu technisch geeignete Prozessreaktoren auszuwählen und miteinander zu einer Produktionsanlage zu kombinieren.
Üblicherweise ist eine Vielzahl von Prozessreaktoren verfügbar, wobei in der Regel auch verschiedene Prozessreaktoren vorhanden sind, mit denen ein bestimmter Prozessschritt durchführbar ist. Aus diesem Grund ist die Planung einer Produktionsanlage hinsichtlich ihrer technischen Ausgestaltungen und ihrer Wirtschaftlichkeit sehr komplex. Es besteht daher ein Bedürfnis, die Planung von wirtschaftlich und technisch optimierten Produktionsanlagen zu vereinfachen. DE102006060494 beschreibt ein Verfahren zur Einschätzung der Robustheit einer vorgeschlagenen Lösung Aufgabe der Erfindung ist es, eine zügige und optimale Planung einer zur Durchführung von wenigstens einer chemischen Reaktion eingerichteten Anlage unter Berücksichtigung von einer möglichst großen Vielzahl von Randbedingungen zu ermöglichen.
Diese Aufgabe wird durch ein Verfahren mit den Merkmalen gemäß Patentanspruch 1, ein Computerprogramm mit den Merkmalen gemäß Patentanspruch 6, einen Datenträger mit den Merkmalen gemäß Patentanspruch 7 sowie ein Computersystem mit den Merkmalen gemäß Patentanspruch 8 gelöst. Bevorzugte Ausgestaltungen sind in den Unteransprüchen angegeben, die jeweils für sich genommen oder in beliebiger Kombination miteinander einen Aspekt der Erfindung darstellen können.
Mit Patentanspruch 1 wird ein Verfahren zum Betreiben einer zur Durchführung von wenigstens einer chemischen Reaktion eingerichteten Anlage vorgeschlagen, wobei technisch und ökonomisch optimal zur Ausbildung der Produktionsanlage geeignete Prozessreaktoren bereitgestellt werden, und wobei dieses Bereitstellen ein zumindest teilautomatisiertes Auswählen der technisch und ökonomisch optimal zur Ausbildung der Produktionsanlage geeigneten Prozessreaktoren aus einer Vielzahl von Prozessreaktoren unter Berücksichtigung von in einer Datenbank hinterlegten, den Prozessreaktoren der Vielzahl von Prozessreaktoren zugeordneten reaktorspezifischen technischen Parametern und von vorgegebenen prozessspezifischen technischen Kriterien umfasst, indem in wenigstens einem Auswählschritt für jeden Prozessreaktor der Vielzahl von Prozessreaktoren geprüft wird, ob wenigstens ein diesem Prozessreaktor zugeordneter reaktorspezifischer technischer Parameter und/oder wenigstens eine aus zumindest einem diesem Prozessreaktor zugeordneten reaktorspezifischen technischen Parameter und wenigstens einem prozessspezifischen technischen Parameter abgeleitete prozessspezifische und reaktorspezifische technische Zielgröße wenigstens ein prozessspezifisches technisches Kriterium erfüllt.

Das Bereitstellen der technisch und ökonomisch optimal zur Ausbildung der Produktionsanlage geeigneten Prozessreaktoren umfasst neben der physischen Bereitstellung insbesondere das Bereitstellen von reaktorspezifischen technischen Parametern zur einer Vielzahl von Prozessreaktoren in einer Reaktordatenbank. Aus dieser Reaktordatenbank können einzelne Prozessreaktoren im Zuge des zumindest teilautomatisierten Auswählens ausgewählt werden, die technisch und ökonomisch optimal zur Ausbildung einer bestimmten Produktionsanlage geeignet sind. Bei diesem Auswählen werden neben den reaktorspezifischen technischen Parametern auch vorgegebene prozessspezifische technische Kriterien berücksichtigt. Die prozessspezifischen technischen Kriterien können verschiedenster Art sein. Beispielsweise können prozessspezifische technische Kriterien in Form von einzuhaltenden Randbedingungen von durchzuführenden Prozessschritten gegeben sein.

Beim zumindest teilautomatisierten Auswählen wird in wenigstens einem Auswählschritt für jeden Prozessreaktor der Vielzahl von Prozessreaktoren geprüft, ob wenigstens ein diesem Prozessreaktor zugeordneter reaktorspezifischer technischer Parameter und/oder wenigstens eine aus zumindest einem diesem Prozessreaktor zugeordneten reaktorspezifischen technischen Parameter und wenigstens einem prozessspezifischen technischen Parameter abgeleitete prozessspezifische und reaktorspezifische technische Zielgröße wenigstens ein prozessspezifisches technisches Kriterium erfüllt. Als prozessspezifische und reaktorspezifische technische Zielgröße kann beispielsweise eine aus einer Modellgleichung folgende Verweilzeit eines Prozessreaktors dienen, wobei zur Ableitung dieser Zielgröße als reaktorspezifischer technischer Parameter das Reaktorvolumen und als prozessspezifische technische Parameter ein geplanter Volumenstrom und maximal zulässige Verweilzeiten berücksichtigt werden können. Wird zur Ableitung einer prozessspezifischen und reaktorspezifischen technischen Zielgröße kein prozessspezifischer technischer Parameter berücksichtigt, kann die Zielgröße beispielsweise direkt durch einen reaktorspezifischen technischen Parameter, z. B. eine Reaktortemperatur oder dergleichen, gegeben sein.

Das zumindest teilweise automatisierte Auswählen kann auch zwei oder mehrere Auswählschritte umfassen. Bei einem teilweise automatisierten Auswählen können mehrere geeignete Prozessreaktoren ausgewählt und diese Auswahl, beispielsweise als graphische Darstellung, einem Planungspersonal zur Verfügung gestellt werden, so dass das Planungspersonal einen abschließenden Auswählschritt ausführen kann. Alternativ kann das Auswählen vollautomatisiert erfolgen, indem ein bestimmter Prozessreaktor bzw. eine bestimmte Kombination von Prozessreaktoren ohne einen Eingriff von Planungspersonal abschließend ausgewählt wird.

Gemäß einer vorteilhaften Ausgestaltung umfasst das zumindest teilautomatisierte Auswählen wenigstens zwei aufeinanderfolgende Auswählschritte, wobei sich die Auswählschritte zumindest in den jeweiligen prozessspezifischen technischen Kriterien und den damit verglichenen reaktorspezifischen technischen Parametern bzw. prozessspezifischen und reaktorspezifischen technischen Zielgrößen voneinander unterscheiden. Beispielsweise können in einem ersten Auswählschritt Prozessreaktoren mit zulässigen Verweilzeiten aus der Vielzahl von Prozessreaktoren ausgewählt werden, wonach aus diesen ausgewählten Prozessreaktoren wenigstens ein Prozessreaktor ausgewählt wird, dessen Betriebsdruck zulässig ist. Die Anzahl der möglichen Auswählschritte kann mit wachsender Anzahl an verfügbaren verschiedenartigen Parametern anwachsen.

Nach einer weiteren vorteilhaften Ausgestaltung erfolgt das zumindest teilautomatisierte Auswählen der technisch und ökonomisch optimal zur Ausbildung der Produktionsanlage geeigneten Prozessreaktoren aus der Vielzahl von Prozessreaktoren unter Berücksichtigung von in einer Datenbank hinterlegten technischen Informationen bezüglich möglicher serieller und/oder paralleler Verschaltungen von Prozessreaktoren. Durch ein paralleles Verschalten von Prozessreaktoren bzw. von durch Prozessreaktoren gebildeten Reaktorkanälen kann eine Produktionskapazität eines Reaktorkanals erhöht werden. Des Weiteren können durch paralleles und/oder serielles Verschalten von Prozessreaktoren bzw. von Reaktorkanälen ein Prozessvolumen und eine Verweilzeit erhöht werden. Dieses wird gemäß dieser Ausgestaltung des Verfahrens berücksichtigt.

Eine weitere vorteilhafte Ausgestaltung sieht vor, dass das prozessspezifische technische Kriterium durch einen prozessspezifischen Parametergrenzwert, dessen Über- oder Unterschreitung zu einem Erfüllen des prozesstechnischen Kriteriums führt, oder durch einen prozessspezifischen Parameterbereich, dessen Einhaltung zu einem Erfüllen des prozesstechnischen Kriteriums führt, definiert wird. Durch einen Vergleich von reaktorspezifischen technischen Parametern und/oder prozessspezifischen und reaktorspezifischen technischen Zielgrößen mit dem prozessspezifischen Parametergrenzwert bzw. dem prozessspezifischen Parameterbereich kann beurteilt werden, ob ein prozessspezifisches technisches Kriterium erfüllt ist.

Vorteilhafterweise berücksichtigt das prozessspezifische technische Kriterium, ob
- ein zur Durchführung einer bestimmten chemischen Reaktion erforderlicher Massendurchsatz durch einen Prozessreaktor möglich ist,
- eine Verweilzeit eines Prozessreaktors zur Durchführung einer bestimmten chemischen Reaktion zulässig ist,
- ein Betriebsdruck und/oder ein Druckverlust eines Prozessreaktors zur Durchführung einer bestimmten chemischen Reaktion zulässig ist,
- eine Wärmeübertragungsleistung eines Prozessreaktors zur Durchführung einer bestimmten chemischen Reaktion zulässig ist,
- geeignete Kinetiken von Reaktion und Vermischung in einem Reaktor während einer Durchführung einer bestimmten chemischen Reaktion vorliegen,
- ein thermisch sicherer Betrieb eines Prozessreaktors während einer Durchführung einer bestimmten chemischen Reaktion gewährleistet ist,
- eine Temperatur an einem Hotspot eines Prozessreaktors zur Durchführung einer bestimmten chemischen Reaktion zulässig ist, oder
- eine ausreichend intensive Initialvermischung von Edukten mittels eines Prozess-reaktors während der Durchführung einer bestimmten chemischen Reaktion erreichbar ist. Welche dieser prozessspezifischen technischen Kriterien berücksichtigt werden, hängt von den jeweiligen Gegebenheiten, Anforderungen und technischen Ausgestaltungen von Prozessreaktoren ab.

Mit Patentanspruch 6 wird ein Computerprogramm mit auf einem computerlesbaren Datenträger gespeicherten Programmcodemitteln vorgeschlagen, die einen Computer oder eine entsprechenden Recheneinheit veranlassen, ein Verfahren gemäß einer der vorgenannten Ausgestaltungen oder einer beliebigen Kombination derselben durchzuführen, wenn sie auf dem Computer bzw. der entsprechenden Recheneinheit ausgeführt werden. Mit diesem Computerprogramm sind die oben mit Bezug auf das Verfahren genannten Vorteile entsprechend verbunden.

Mit Patentanspruch 7 wird ein Datenträger mit einem vorgenannten Computerprogramm vorgeschlagen. Mit diesem Datenträger sind die oben mit Bezug auf das Verfahren bzw. das Computerprogramm genannten Vorteile entsprechend verbunden
Ferner wird mit Patentanspruch 8 ein Computersystem vorgeschlagen, auf dem ein vorgenanntes Computerprogramm geladen ist. Mit diesem Computersystem sind die oben mit Bezug auf das Verfahren bzw. das Computerprogramm genannten Vorteile entsprechend verbunden.

Im Folgenden wird die Erfindung unter Bezugnahme auf die anliegenden Figuren anhand von bevorzugten Ausführungsbeispielen exemplarisch erläutert, wobei die nachfolgend dargestellten Merkmale sowohl jeweils für sich genommen als auch in Kombination miteinander einen Aspekt der Erfindung darstellen können. Es zeigen
- Figur 1:: eine schematische Darstellung eines beispielhaften Ablaufs eines erfindungsgemäßen Verfahrens,
- Figur 2:: eine schematische Darstellung eines weiteren beispielhaften Ablaufs eines erfindungsgemäßen Verfahrens, und
- Figur 3:: eine schematische Darstellung eines weiteren beispielhaften Ablaufs eines erfindungsgemäßen Verfahrens.

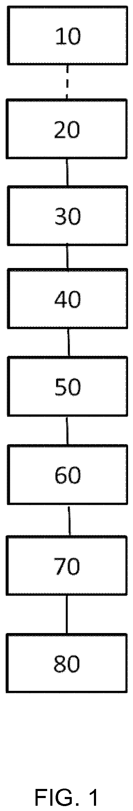

Figur 1 zeigt eine schematische Darstellung eines beispielhaften Ablaufs eines erfindungsgemäßen Verfahrens, wobei diese Ausführungsform ein zumindest teilautomatisiertes Auswählen von technisch und ökonomisch optimal zur Ausbildung einer gewünschten Produktionsanlage geeigneten Prozessreaktoren in Form von Verweilzeit-Kanalreaktoren aus einer Vielzahl von Prozessreaktoren unter Berücksichtigung von in einer Datenbank hinterlegten, den Prozessreaktoren der Vielzahl von Prozessreaktoren zugeordneten reaktorspezifischen technischen Parametern und von vorgegebenen prozessspezifischen technischen Kriterien umfasst. Das zumindest teilautomatisierte Auswählen umfasst sieben aufeinanderfolgende Auswählschritte, wobei sich die Auswählschritte zumindest in den jeweiligen prozessspezifischen technischen Kriterien und den damit verglichenen reaktorspezifischen technischen Parametern bzw. prozessspezifischen und reaktorspezifischen technischen Zielgrößen voneinander unterscheiden.

In einem vorgelagerten Verfahrensschritt 10 erfolgt die Pflege der Datenbank, auf die zum Auswählen von Prozessreaktoren zurückgegriffen wird. Während dieser Pflege werden zumindest reaktorspezifische technische Parameter manuell oder automatisiert in die Datenbank eingegeben.

Im Verfahrensschritt 20 erfolgt ein erster Auswählschritt, in dem für jeden Prozessreaktor der Vielzahl von Prozessreaktoren geprüft wird, ob wenigstens ein diesem Prozessreaktor zugeordneter reaktorspezifischer technischer Parameter in Form eines Parameterbereichs für den möglichen Massendurchsatz durch den Prozessreaktor ein prozessspezifisches technisches Kriterium, nämlich ob ein zur Durchführung einer bestimmten chemischen Reaktion erforderlicher geplanter Massendurchsatz durch einen Prozessreaktor möglich ist, erfüllt. Kann ein geplanter Massendurchsatz durch einen Prozessreaktor nicht erreicht werden, kann geprüft werden, ob eine geringfügige Anpassung des geplanten Massendurchsatzes möglich ist, um einen Massendurchsatz im reaktorspezifischen Parameterbereich für den möglichen Massendurchsatz durch den Prozessreaktor zu erreichen. Als Ergebnis des Verfahrensschritts 20 ergibt sich eine Auswahl von Prozessreaktoren, welche eine zulässige Massendurchsätze aufweisen.

Im Verfahrensschritt 30 erfolgt ein weiterer Auswählschritt, in dem für jeden Prozessreaktor der im Verfahrensschritt 20 gewonnenen Auswahl von Prozessreaktoren geprüft wird, ob eine mittels einer Modellgleichung aus einem diesem Prozessreaktor zugeordneten reaktorspezifischen technischen Parameter in Form des jeweiligen Reaktorvolumens sowie prozessspezifischen technischen Parametern in Form eines Parameterbereichs für zulässige Verweilzeiten und eines geplanten Volumenstroms abgeleitete prozessspezifische und reaktorspezifische technische Zielgröße in Form einer Verweilzeit des jeweiligen Prozessreaktors ein prozessspezifisches technisches Kriterium, nämlich ob die Verweilzeit in dem Parameterbereich für zulässige Verweilzeiten liegt, erfüllt. Liegt die Verweilzeit eines Prozessreaktors nicht in dem Parameterbereich für zulässige Verweilzeiten, kann geprüft werden, ob eine geringfügige Anpassung des geplanten Massendurchsatzes möglich ist, um den Parameterbereichs für zulässige Verweilzeiten zu erreichen. Als Ergebnis des Verfahrensschritts 30 ergibt sich eine weitere Auswahl von Prozessreaktoren, welche eine zulässige Verweilzeit aufweisen.

Im Verfahrensschritt 40 erfolgt ein weiterer Auswählschritt, in dem für jeden Prozessreaktor der im Verfahrensschritt 30 gewonnenen Auswahl von Prozessreaktoren geprüft wird, ob ein diesem Prozessreaktor zugeordneter reaktorspezifischer technischer Parameter in Form eines möglichen Betriebsdrucks in dem Prozessreaktor ein prozessspezifisches technisches Kriterium, nämlich ob der Betriebsdruck und/oder ein daraus abgeleiteter Druckverlust des Prozessreaktors zur Durchführung einer bestimmten chemischen Reaktion zulässig ist, erfüllt. Als Ergebnis des Verfahrensschritts 40 ergibt sich eine weitere Auswahl von Prozessreaktoren, welche einen zulässigen Betriebsdruck bzw. einen zulässigen Druckverlust aufweisen.

Im Verfahrensschritt 50 erfolgt ein weiterer Auswählschritt, in dem für jeden Prozessreaktor der im Verfahrensschritt 40 gewonnenen Auswahl von Prozessreaktoren geprüft wird, ob eine aus einem diesem Prozessreaktor zugeordneten reaktorspezifischen technischen Parameter in Form von geometrischen Eigenschaften des Prozessreaktors und wenigstens einem prozessspezifischen technischen Parameter in Form eines geplanten Massenstroms abgeleitete prozessspezifische und reaktorspezifische technische Zielgröße ein prozessspezifisches technisches Kriterium, nämlich ob Strömungsverhältnisse in dem Prozessreaktor zur Durchführung der gewünschten chemischen Reaktion geeignet sind, erfüllt. Hierdurch wird eine Vergleichbarkeit von Prozessreaktoren mit unterschiedlichen geometrischen Eigenschaften erreicht. Als Ergebnis des Verfahrensschritts 50 ergibt sich eine weitere Auswahl von Prozessreaktoren, welche geeignete Strömungsverhältnisse aufweisen.

Im Verfahrensschritt 60 erfolgt ein weiterer Auswählschritt, in dem für jeden Prozessreaktor der im Verfahrensschritt 50 gewonnenen Auswahl von Prozessreaktoren geprüft wird, ob eine aus zumindest einem diesem Prozessreaktor zugeordneten reaktorspezifischen technischen Parameter und wenigstens einem prozessspezifischen technischen Parameter abgeleitete prozessspezifische und reaktorspezifische technische Zielgröße in Form einer möglichen Wärmeübertragungsleistung des Prozessreaktors ein prozessspezifisches technisches Kriterium, nämlich ob eine Wärmeübertragungsleistung eines Prozessreaktors zur Durchführung einer bestimmten chemischen Reaktion zulässig ist, erfüllt. Als Ergebnis des Verfahrensschritts 60 ergibt sich eine weitere Auswahl von Prozessreaktoren, welche geeignete Wärmeübertragungsleistung aufweisen.

Im Verfahrensschritt 70 erfolgt ein weiterer Auswählschritt, in dem für jeden Prozessreaktor der im Verfahrensschritt 60 gewonnenen Auswahl von Prozessreaktoren geprüft wird, ob eine aus zumindest einem diesem Prozessreaktor zugeordneten reaktorspezifischen technischen Parameter und wenigstens einem prozessspezifischen technischen Parameter abgeleitete prozessspezifische und reaktorspezifische technische Zielgröße in Form von Kinetiken von Reaktion und Vermischung in dem Prozessreaktor während einer Durchführung einer bestimmten chemischen Reaktion ein prozessspezifisches technisches Kriterium, nämlich ob geeignete Kinetiken von Reaktion und Vermischung in dem Reaktor während einer Durchführung einer bestimmten chemischen Reaktion vorliegen, erfüllt. Hierbei kann auch geprüft werden, ob eine ausreichend intensive Initialvermischung von Edukten mittels des Prozessreaktors während der Durchführung einer bestimmten chemischen Reaktion erreichbar ist. Als Ergebnis des Verfahrensschritts 70 ergibt sich eine weitere Auswahl von Prozessreaktoren, welche geeignete Kinetiken von Reaktion und Vermischung in dem Reaktor während einer Durchführung einer bestimmten chemischen Reaktion aufweisen.

Im Verfahrensschritt 80 erfolgt ein weiterer Auswählschritt, in dem für jeden Prozessreaktor der im Verfahrensschritt 70 gewonnenen Auswahl von Prozessreaktoren geprüft wird erfolgt ein erster Auswahlschritt, in dem für jeden Prozessreaktor der Vielzahl von Prozessreaktoren geprüft wird, ob eine aus zumindest einem diesem Prozessreaktor zugeordneten reaktorspezifischen technischen Parameter und wenigstens einem prozessspezifischen technischen Parameter abgeleitete prozessspezifische und reaktorspezifische technische Zielgröße ein prozessspezifisches technisches Kriterium, nämlich ob ein thermisch sicherer Betrieb des Prozessreaktors während einer Durchführung einer bestimmten chemischen Reaktion gewährleistet ist, erfüllt. Hierbei kann auch geprüft werden, ob eine Temperatur an einem Hotspot des jeweiligen Prozessreaktors zur Durchführung einer bestimmten chemischen Reaktion zulässig ist. Als Ergebnis des Verfahrensschritts 80 ergibt sich eine weitere Auswahl von Prozessreaktoren, mit denen ein thermisch sicherer Betrieb des Prozessreaktors während einer Durchführung einer bestimmten chemischen Reaktion gewährleistet ist.

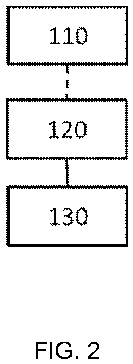

Figur 2 zeigt eine schematische Darstellung eines beispielhaften Ablaufs eines erfindungsgemäßen Verfahrens, wobei diese Ausführungsform ein zumindest teilautomatisiertes Auswählen von technisch und ökonomisch optimal zur Ausbildung einer gewünschten Produktionsanlage geeigneten Prozessreaktoren in Form von Mischeinheiten aus einer Vielzahl von Prozessreaktoren unter Berücksichtigung von in einer Datenbank hinterlegten, den Prozessreaktoren der Vielzahl von Prozessreaktoren zugeordneten reaktorspezifischen technischen Parametern und von vorgegebenen prozessspezifischen technischen Kriterien umfasst. Das zumindest teilautomatisierte Auswählen umfasst zwei aufeinanderfolgende Auswählschritte, wobei sich die Auswählschritte zumindest in den jeweiligen prozessspezifischen technischen Kriterien und den damit verglichenen reaktorspezifischen technischen Parametern bzw. prozessspezifischen und reaktorspezifischen technischen Zielgrößen voneinander unterscheiden.

Im vorgelagerten Verfahrensschritt 110 erfolgt die Pflege der Datenbank, auf die zum Auswählen von Prozessreaktoren zurückgegriffen wird. Während dieser Pflege werden zumindest reaktorspezifische technische Parameter manuell oder automatisiert in die Datenbank eingegeben.

Im Verfahrensschritt 120 erfolgt ein Auswählschritt, in dem für jeden Prozessreaktor der der Vielzahl von Prozessreaktoren geprüft wird, ob ein diesem Prozessreaktor zugeordneter reaktorspezifischer technischer Parameter in Form eines möglichen Betriebsdrucks in dem Prozessreaktor ein prozessspezifisches technisches Kriterium, nämlich ob der Betriebsdruck und/oder ein daraus abgeleiteter Druckverlust des Prozessreaktors zur Durchführung einer bestimmten chemischen Reaktion zulässig ist, erfüllt. Als Ergebnis des Verfahrensschritts 120 ergibt sich eine weitere Auswahl von Prozessreaktoren, welche einen zulässigen Betriebsdruck bzw. einen zulässigen Druckverlust aufweisen.

Im Verfahrensschritt 130 wird ein eigenständiger Prozessreaktor ausgewählt, dem keine Verweilzeitstrecke nachgeschaltet ist.

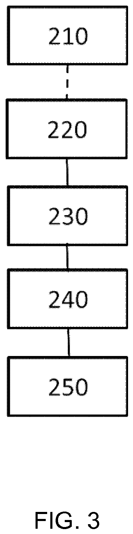

Figur 3 zeigt eine schematische Darstellung eines beispielhaften Ablaufs eines erfindungsgemäßen Verfahrens, wobei diese Ausführungsform ein zumindest teilautomatisiertes Auswählen von technisch und ökonomisch optimal zur Ausbildung einer gewünschten Produktionsanlage geeigneten Prozessreaktoren in Form von kontinuierlichen Rührkesselreaktoren aus einer Vielzahl von Prozessreaktoren unter Berücksichtigung von in einer Datenbank hinterlegten, den Prozessreaktoren der Vielzahl von Prozessreaktoren zugeordneten reaktorspezifischen technischen Parametern und von vorgegebenen prozessspezifischen technischen Kriterien umfasst. Das zumindest teilautomatisierte Auswählen umfasst vier aufeinanderfolgende Auswählschritte, wobei sich die Auswählschritte zumindest in den jeweiligen prozessspezifischen technischen Kriterien und den damit verglichenen reaktorspezifischen technischen Parametern bzw. prozessspezifischen und reaktorspezifischen technischen Zielgrößen voneinander unterscheiden.

Im vorgelagerten Verfahrensschritt 210 erfolgt die Pflege der Datenbank, auf die zum Auswählen von Prozessreaktoren zurückgegriffen wird. Während dieser Pflege werden zumindest reaktorspezifische technische Parameter manuell oder automatisiert in die Datenbank eingegeben.

Im Verfahrensschritt 220 erfolgt ein Auswählschritt, in dem für jeden Prozessreaktor der der Vielzahl von Prozessreaktoren geprüft wird, ob ein diesem Prozessreaktor zugeordneter reaktorspezifischer technischer Parameter in Form eines möglichen Betriebsdrucks in dem Prozessreaktor ein prozessspezifisches technisches Kriterium, nämlich ob der Betriebsdruck und/oder ein daraus abgeleiteter Druckverlust des Prozessreaktors zur Durchführung einer bestimmten chemischen Reaktion zulässig ist, erfüllt. Als Ergebnis des Verfahrensschritts 220 ergibt sich eine weitere Auswahl von Prozessreaktoren, welche einen zulässigen Betriebsdruck bzw. einen zulässigen Druckverlust aufweisen.

Im Verfahrensschritt 230 erfolgt ein weiterer Auswählschritt, in dem für jeden Prozessreaktor der im Verfahrensschritt 220 gewonnenen Auswahl von Prozessreaktoren geprüft wird, ob eine mittels einer Modellgleichung aus einem diesem Prozessreaktor zugeordneten reaktorspezifischen technischen Parameter in Form des jeweiligen Reaktorvolumens sowie prozessspezifischen technischen Parametern in Form eines Parameterbereichs für zulässige Verweilzeiten und eines geplanten Volumenstroms abgeleitete prozessspezifische und reaktorspezifische technische Zielgröße in Form einer Verweilzeit des jeweiligen Prozessreaktors ein prozessspezifisches technisches Kriterium, nämlich ob die Verweilzeit in dem Parameterbereich für zulässige Verweilzeiten liegt, erfüllt. Liegt die Verweilzeit eines Prozessreaktors nicht in dem Parameterbereich für zulässige Verweilzeiten, kann geprüft werden, ob eine geringfügige Anpassung des geplanten Massendurchsatzes möglich ist, um den Parameterbereichs für zulässige Verweilzeiten zu erreichen. Als Ergebnis des Verfahrensschritts 230 ergibt sich eine weitere Auswahl von Prozessreaktoren, welche eine zulässige Verweilzeit aufweisen.

Im Verfahrensschritt 240 erfolgt ein weiterer Auswählschritt, in dem für jeden Prozessreaktor der im Verfahrensschritt 230 gewonnenen Auswahl von Prozessreaktoren geprüft wird, ob eine aus zumindest einem diesem Prozessreaktor zugeordneten reaktorspezifischen technischen Parameter und wenigstens einem prozessspezifischen technischen Parameter abgeleitete prozessspezifische und reaktorspezifische technische Zielgröße in Form einer möglichen Wärmeübertragungsleistung des Prozessreaktors ein prozessspezifisches technisches Kriterium, nämlich ob eine Wärmeübertragungsleistung eines Prozessreaktors zur Durchführung einer bestimmten chemischen Reaktion zulässig ist, erfüllt. Als Ergebnis des Verfahrensschritts 240 ergibt sich eine weitere Auswahl von Prozessreaktoren, welche geeignete Wärmeübertragungsleistung aufweisen.

Im Verfahrensschritt 250 erfolgt ein weiterer Auswählschritt, in dem für jeden Prozessreaktor der im Verfahrensschritt 240 gewonnenen Auswahl von Prozessreaktoren geprüft wird, ob eine aus einem diesem Prozessreaktor zugeordneten reaktorspezifischen technischen Parameter in Form von geometrischen Eigenschaften des Prozessreaktors und wenigstens einem prozessspezifischen technischen Parameter in Form eines geplanten Massenstroms abgeleitete prozessspezifische und reaktorspezifische technische Zielgröße ein prozessspezifisches technisches Kriterium, nämlich ob Strömungsverhältnisse in dem Prozessreaktor zur Durchführung der gewünschten chemischen Reaktion geeignet sind, erfüllt. Hierdurch wird eine Vergleichbarkeit von Prozessreaktoren mit unterschiedlichen geometrischen Eigenschaften erreicht. Als Ergebnis des Verfahrensschritts 250 ergibt sich eine weitere Auswahl von Prozessreaktoren, welche geeignete Strömungsverhältnisse aufweisen.

## Patentansprüche

1. Verfahren zum Betreiben einer zur Durchführung von wenigstens einer chemischen Reaktion eingerichteten Anlage, wobei technisch und ökonomisch optimal zur Ausbildung der Produktionsanlage geeignete Prozessreaktoren bereitgestellt werden, und wobei dieses Bereitstellen ein zumindest teilautomatisiertes Auswählen der technisch und ökonomisch optimal zur Ausbildung der Produktionsanlage geeigneten Prozessreaktoren aus einer Vielzahl von Prozessreaktoren unter Berücksichtigung von in einer Datenbank hinterlegten, den Prozessreaktoren der Vielzahl von Prozessreaktoren zugeordneten reaktorspezifischen technischen Parametern und von vorgegebenen prozessspezifischen technischen Kriterien umfasst, indem in wenigstens einem Auswählschritt für jeden Prozessreaktor der Vielzahl von Prozessreaktoren geprüft wird, ob wenigstens ein diesem Prozessreaktor zugeordneter reaktorspezifischer technischer Parameter und/oder wenigstens eine aus zumindest einem diesem Prozessreaktor zugeordneten reaktorspezifischen technischen Parameter und wenigstens einem prozessspezifischen technischen Parameter abgeleitete prozessspezifische und reaktorspezifische technische Zielgröße wenigstens ein prozessspezifisches technisches Kriterium erfüllt.

2. Verfahren gemäß Anspruch 1, **dadurch gekennzeichnet, dass** das zumindest teilautomatisierte Auswählen wenigstens zwei aufeinanderfolgende Auswählschritte umfasst, wobei sich die Auswählschritte zumindest in den jeweiligen prozessspezifischen technischen Kriterien und den damit verglichenen reaktorspezifischen technischen Parametern bzw. prozessspezifischen und reaktorspezifischen technischen Zielgrößen voneinander unterscheiden.

3. Verfahren gemäß Anspruch 1 oder 2, **dadurch gekennzeichnet, dass** das zumindest teilautomatisierte Auswählen der technisch und ökonomisch optimal zur Ausbildung der Produktionsanlage geeigneten Prozessreaktoren aus der Vielzahl von Prozessreaktoren unter Berücksichtigung von in einer Datenbank hinterlegten technischen Informationen bezüglich möglicher serieller und/oder paralleler Verschaltungen von Prozessreaktoren erfolgt.

4. Verfahren gemäß einem der Ansprüche 1 bis 3, **dadurch gekennzeichnet, dass** das prozessspezifische technische Kriterium durch einen prozessspezifischen Parametergrenzwert, dessen Über- oder Unterschreitung zu einem Erfüllen des prozesstechnischen Kriteriums führt, oder durch einen prozessspezifischen Parameterbereich, dessen Einhaltung zu einem Erfüllen des prozesstechnischen Kriteriums führt, definiert wird.

5. Verfahren gemäß einem der Ansprüche 1 bis 4, **dadurch gekennzeichnet, dass** das prozessspezifische technische Kriterium berücksichtigt, ob
- ein zur Durchführung einer bestimmten chemischen Reaktion erforderlicher Massendurchsatz durch einen Prozessreaktor möglich ist,
- eine Verweilzeit eines Prozessreaktors zur Durchführung einer bestimmten chemischen Reaktion zulässig ist,
- ein Betriebsdruck und/oder ein Druckverlust eines Prozessreaktors zur Durchführung einer bestimmten chemischen Reaktion zulässig ist,
- eine Wärmeübertragungsleistung eines Prozessreaktors zur Durchführung einer bestimmten chemischen Reaktion zulässig ist,
- geeignete Kinetiken von Reaktion und Vermischung in einem Reaktor während einer Durchführung einer bestimmten chemischen Reaktion vorliegen,
- ein thermisch sicherer Betrieb eines Prozessreaktors während einer Durchführung einer bestimmten chemischen Reaktion gewährleistet ist,
- eine Temperatur an einem Hotspot eines Prozessreaktors zur Durchführung einer bestimmten chemischen Reaktion zulässig ist, oder
- eine ausreichend intensive Initialvermischung von Edukten mittels eines Prozessreaktors während der Durchführung einer bestimmten chemischen Reaktion erreichbar ist.

6. Computerprogramm mit auf einem computerlesbaren Datenträger gespeicherten Programmcodemitteln, die einen Computer oder eine entsprechenden Recheneinheit veranlassen, ein Verfahren gemäß einem der Ansprüche 1 bis 5 durchzuführen, wenn sie auf dem Computer bzw. der entsprechenden Recheneinheit ausgeführt werden.

7. Datenträger mit einem Computerprogramm nach Anspruch 6.

8. Computersystem, auf dem ein Computerprogramm nach Anspruch 6 geladen ist.

## Claims

1. Method of operating a plant set up for performing at least one chemical reaction, wherein said method comprises providing process reactors of optimal technical and economic suitability for forming the production plant and wherein this providing operation comprises selecting in at least partially automated fashion the process reactors of optimal technical and economic suitability for forming the production plant from a multiplicity of process reactors taking account of reactor-specific technical parameters assigned to the process reactors of the multiplicity of process reactors and recorded in a database and of predefined process-specific technical criteria by performing at least one selection step for each process reactor of the multiplicity of process reactors which comprises verifying whether at least one reactor-specific technical parameter assigned to this process reactor and/or at least one process-specific and reactor-specific technical target value derived from at least one reactor-specific technical parameter assigned to this process reactor and from at least one process-specific technical parameter fulfils at least one process-specific technical criterion.

2. Method according to Claim 1, **characterized in that** the at least partially automated selecting operation comprises at least two successive selection steps, wherein said selection steps differ from one another at least in the respective process-specific technical criteria and the reactor-specific technical parameters/process-specific and reactor-specific technical target values compared therewith.

3. Method according to either of Claims 1 and 2, **characterized in that** the at least partially automated selecting of the process reactors of optimal technical and economic suitability for forming the production plant from the multiplicity of process reactors is carried out taking account of technical information concerning possible serial and/or parallel arrangements of process reactors stored in a database.

4. Method according to any of Claims 1 to 3, **characterized in that** the process-specific technical criterion is defined by a process-specific threshold parameter which when exceeded or fallen below results in the process engineering criterion being met or by a process-specific parameter range which when adhered to results in the process engineering criterion being met.

5. Method according to any of Claims 1 to 4, **characterized in that** the process-specific technical criterion takes into account whether
- a mass throughput through a process reactor required to perform a particular chemical reaction is possible,
- a dwell time for a process reactor for performing a particular chemical reaction is permissible,
- an operating pressure and/or a pressure drop for a process reactor for performing a particular chemical reaction is permissible,
- a heat transfer performance for a process reactor for performing a particular chemical reaction is permissible,
- suitable kinetics of reaction and mixing are present in a reactor during performance of a particular chemical reaction,
- thermally safe operation of a process reactor during performance of a particular chemical reaction is ensured,
- a temperature at a hotspot in a process reactor for performing a particular chemical reaction is permissible, or
- sufficiently thorough initial mixing of reactants by means of a process reactor during performance of a particular chemical reaction is achievable.

6. Computer program comprising program code means stored on a computer-readable data storage medium which prompt a computer or an appropriate processing unit to carry out a method according to any of Claims 1 to 5 when they are run on the computer/the appropriate processing unit.

7. Data storage medium comprising a computer program according to Claim 6.

8. Computer system having a computer program according to Claim 6 loaded onto it.

## Revendications

1. Procédé d'exploitation d'une unité conçue pour la réalisation d'au moins une réaction chimique, le procédé consistant à mettre en place des réacteurs de traitement techniquement et économiquement les mieux appropriés possible pour la création de l'unité de production, cette mise en place comprenant une sélection au moins partiellement automatisée des réacteurs de traitement techniquement et économiquement les mieux appropriés possible pour la création de l'unité de production parmi une pluralité de réacteurs de traitement, en prenant en considération des paramètres techniques spécifiques aux réacteurs associés aux réacteurs de traitement de la pluralité de réacteurs de traitement et mémorisés dans une banque de données, et des critères techniques prédéterminés spécifiques au traitement, selon lequel, dans au moins une étape de sélection, on vérifie pour chaque réacteur de traitement de la pluralité de réacteurs de traitement si au moins un paramètre technique spécifique au réacteur et associé à ce réacteur de traitement et/ou au moins une grandeur technique cible spécifique au traitement et spécifique au réacteur, dérivée d'au moins un paramètre technique spécifique au réacteur associé à ce réacteur de traitement et d'au moins un paramètre technique spécifique au traitement, satisfait au moins un critère technique spécifique au traitement.

2. Procédé selon la revendication 1, **caractérisé en ce que** la sélection au moins partiellement automatisée comprend au moins deux étapes de sélection successives, les étapes de sélection différant les unes des autres au moins au niveau des critères techniques spécifiques au traitement respectifs et des paramètres techniques spécifiques au réacteur ou des grandeurs techniques cibles spécifiques au traitement et spécifiques au réacteur comparés avec ceux-ci.

3. Procédé selon la revendication 1 ou 2, **caractérisé en ce que** la sélection au moins partiellement automatisée des réacteurs de traitement techniquement et économiquement les mieux appropriés possible pour la création de l'unité de production parmi la pluralité de réacteurs de traitement a lieu en prenant en considération des informations techniques enregistrées dans une banque de données, relatives à des connexions en série et/ou parallèle possibles de réacteurs de traitement.

4. Procédé selon l'une quelconque des revendications 1 à 3, **caractérisé en ce que** le critère technique spécifique au traitement est défini par une valeur limite de paramètre spécifique au traitement, dont le dépassement ou le non-dépassement conduit à une satisfaction du critère relatif au traitement, ou par une plage de paramètre spécifique au traitement, dont le respect conduit à une satisfaction du critère relatif au traitement.

5. Procédé selon l'une quelconque des revendications 1 à 4, **caractérisé en ce que** le critère technique spécifique au traitement considère si
- un débit massique nécessaire à la réalisation d'une réaction chimique déterminée est possible dans un réacteur de traitement,
- un temps de séjour d'un réacteur de traitement permet la réalisation d'une réaction chimique déterminée,
- une pression d'exploitation et/ou une perte de pression d'un réacteur de traitement permet la réalisation d'une réaction chimique déterminée,
- une puissance de transfert de chaleur d'un réacteur de traitement permet la réalisation d'une réaction chimique déterminée,
- des cinétiques de réaction et un mélange appropriés sont présents dans un réacteur pendant une réalisation d'une réaction chimique déterminée,
- une exploitation thermiquement sûre d'un réacteur de traitement est assurée pendant une réalisation d'une réaction chimique déterminée,
- une température au niveau d'un point chaud d'un réacteur de traitement permet la réalisation d'une réaction chimique déterminée, ou
- un mélange initial suffisamment intensif des réactifs est possible au moyen d'un réacteur de traitement pendant la réalisation d'une réaction chimique déterminée.

6. Programme informatique comprenant des moyens de codage du programme stockés dans un support de données lisible par ordinateur, qui ordonne à un ordinateur ou une unité arithmétique appropriée de réaliser un procédé selon l'une quelconque des revendications 1 à 5 lorsqu'il est exécuté sur l'ordinateur ou l'unité arithmétique appropriée.

7. Support de données comprenant un programme informatique selon la revendication 6.

8. Système informatique, sur lequel un programme informatique selon la revendication 6 est chargé.
